# EUROPÄISCHE PATENTANMELDUNG

(11) **EP 2 700 558 A2**
(43) Veröffentlichungstag der Anmeldung: **26.02.2014**
(21) Anmeldenummer: 13181141.6
(22) Anmeldetag: 21.08.2013
(51) Int. Cl.: B62B 5/08, A47C 9/10, A47C 13/00, B62B 1/20

(54) **Transportwagen**

(30) Priorität: 22.08.2012 DE 202012008037 U; 17.12.2012 DE 202012104917 U
(71) Anmelder: Weis, Hans-Peter, 66989 Höheinöd (DE)
(72) Erfinder: Weis, Hans-Peter, 66989 Höheinöd (DE)
(74) Vertreter: Vièl, Christof

(57) **Zusammenfassung**

Um einen antriebslosen Transportwagen mit zwei Rädern (3) zu schaffen, der als Liege dienen kann und der es ermöglicht, Freizeitutensilien zu transportieren, wird im Rahmen der Erfindung vorgeschlagen, dass ein im wesentlichen horizontaler Rahmen (1) vorgesehen ist, in dessen unteren vorderen Bereich die Aufhängung für die Räder (3)angeordnet ist, wobei der Rahmen (1) in etwa oberhalb der Aufhängung für die Räder ein Kopfteil (4) aufweist, das um zwei Drehpunkte (5) am Rahmen (1) drehbar angelenkt ist, wobei eine Vorrichtung (6) zum Feststellen des Kopfteils (4) in bestimmten Positionen vorgesehen ist, wobei an dem vorderen Ende des Rahmens ein u-förmiges Transportgestell (7) vorgesehen ist, das im Wesentlichen vertikal aus der Ebene des Rahmens (1) herausklappbar ist und wobei an dem dem Kopfteil (4) gegenüberliegenden Ende des Rahmens ein aus dem Rahmen herausziehbares Fußteil (9) mit Stützen (10)vorgesehen ist.

Es wird ein zweirädriger Transportwagen geschaffen, der sowohl zum Transport von Utensilien als auch als Liege dienen kann, wobei lediglich einige Handgriffe, die kein Werkzeug erfordern, notwendig sind, um den Transportwagen in eine Liege zu verwandeln.

## Beschreibung

Die Erfindung betrifft einen Transportwagen mit zwei Rädern.

Zweirädrige Transportwagen sind aus dem Stand der Technik bekannt, beispielsweise in Form von Sackkarren zum Transport von Lasten. Weiterhin sind Strandliegen mit zwei Rädern bekannt, die es ermöglichen, die Strandliege mit geringem Kraftaufwand zu bewegen.

Die Aufgabe der vorliegenden Erfindung besteht darin, einen antriebslosen Transportwagen mit zwei Rädern zu schaffen, der als Liege dienen kann und der es ermöglicht, Freizeitutensilien zu transportieren.

Diese Aufgabe wird im Rahmen der Erfindung dadurch gelöst, daß ein im wesentlichen horizontaler Rahmen vorgesehen ist, in dessen unteren vorderen Bereich die Aufhängung für die Räder angeordnet ist, wobei der Rahmen in etwa oberhalb der Aufhängung für die Räder ein Kopfteil aufweist, das um zwei Drehpunkte am Rahmen drehbar angelenkt ist, wobei eine Vorrichtung zum Feststellen des Kopfteils in bestimmten Positionen vorgesehen ist, wobei an dem vorderen Ende des Rahmens ein u-förmiges Transportgestell vorgesehen ist, das im Wesentlichen vertikal aus der Ebene des Rahmens herausklappbar ist und wobei an dem dem Kopfteil gegenüberliegenden Ende des Rahmens ein aus dem Rahmen herausziehbares Fußteil mit Stützen vorgesehen ist.

Es wird im Rahmen der Erfindung ein zweirädriger Transportwagen geschaffen, der sowohl zum Transport von Utensilien als auch als Liege dienen kann, wobei lediglich einige Handgriffe, die kein Werkzeug erfordern, notwendig sind, um den Transportwagen in eine Liege zu verwandeln. Während der Transportfunktion werden die zu transportierenden Utensilien auf dem Rahmen und dem Kopfteil angeordnet, wobei das Transportgestell wie bei einer Sackkarre als Anschlag dient.

Es wird hierzu einfach das Kopfteil in die gewünschte Neigung gebracht und das Fußteil aus dem Transportgestell herausgezogen.

Eine Weiterbildung der Erfindung besteht darin, daß der Rahmen im seitlichen Bereich jeweils eine Armlehne aufweist.

Erfindungsgemäß ist vorgesehen, daß die Armlehne im Wesentlichen die Form eines aufgebogenen U aufweist, wobei beide Schenkel des U mit dem Rahmen verbunden sind.

Die Armlehnen dienen während des Transportes der seitlichen Sicherung der zu transportierenden Ladung.

Weiterhin ist erfindungsgemäß vorgesehen, daß die Stützen des Fußteils im in den Rahmen eingeschobenen Zustand an mit dem Rahmen verbundenen Fußstützen anliegen.

Es ist zur Erfindung gehörig, daß der Rahmen und das Kopfteil mit einer Bespannung oder einer Auflage versehen sind.

Die Bespannung kann aus natürlichem oder synthetischem Material bestehen. Die Auflage kann aus Kunststoff, Holz oder Metall bestehen.

Weiterhin liegt im Rahmen der Erfindung, daß Multifunktionsboxen vorgesehen sind, die durch die Armlehnen seitlich sicherbar sind.

Schließlich ist es vorteilhaft, daß die Multifunktionsboxen auf dem Rahmen formschlüssig sicherbar sind.

Nachfolgend wird ein Ausführungsbeispiel der Erfindung anhand von Zeichnungen näher erläutert.

Es zeigen
- Fig. 1: den erfindungsgemäßen Transportwagen als Liege in Seitenansicht,
- Fig. 2: den erfindungsgemäßen Transportwagen in Draufsicht,
- Fig. 3: den erfindungsgemäßen Transportwagen in Transportstellung in Seitenansicht.

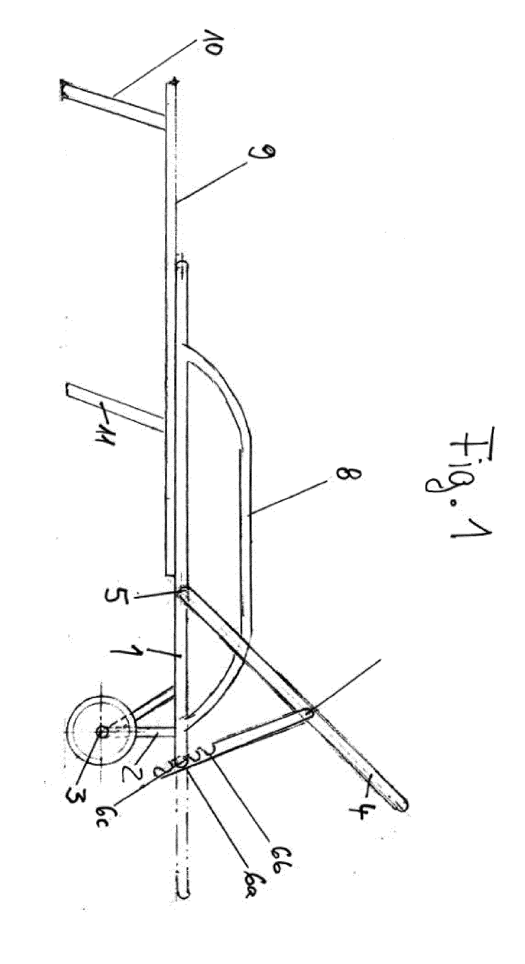

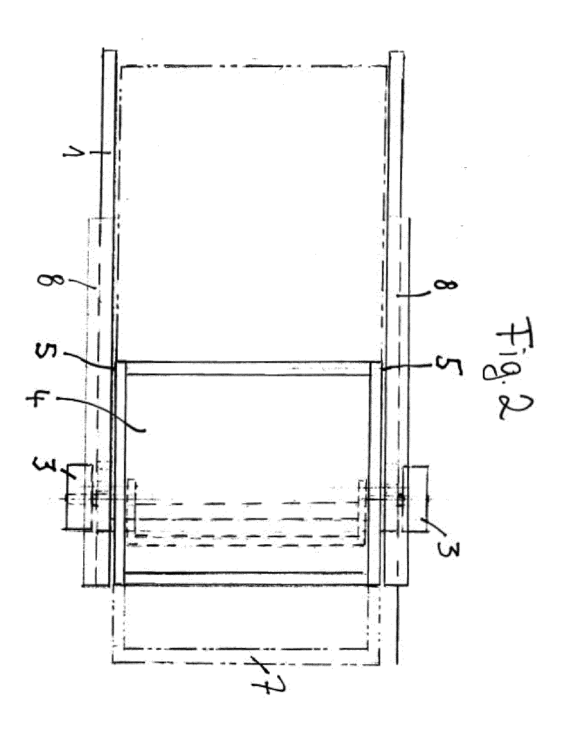

Wie aus den Fig. 1 bis 3 ersichtlich, ist ein im wesentlichen horizontaler Rahmen 1 vorgesehen, in dessen unteren vorderen Bereich die Aufhängung 2 für die beiden Räder 3 angeordnet ist. Der Rahmen 1 besteht bevorzugt aus Rohren aus Aluminium oder einer Leichtmetall-Legierung. Um das Fahren auf Sand zu erleichtern, sollten die Räder 3 eine entsprechende Breite aufweisen.

In etwa oberhalb der Aufhängung 2 für die Räder 3 weist der Rahmen 1 ein Kopfteil 4 auf, das um zwei Drehpunkte 5 am Rahmen 1 drehbar angelenkt ist. Eine Vorrichtung 6 zum Feststellen des Kopfteils 4 in bestimmten Positionen ist vorgesehen, die hier als Stützstange 6a mit Ausnehmungen 6b ausgestaltet ist, wobei die Ausnehmungen 6b in entsprechende Vorsprünge 6c des Rahmens 1 eingreifen können.

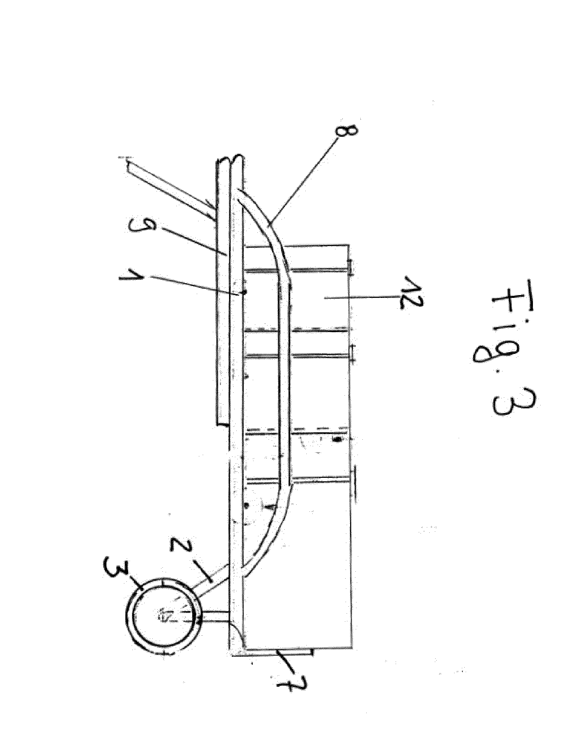

An dem vorderen Ende des Rahmens 1 ist ein u-förmiges Transportgestell 7 vorgesehen, das in Fig. 3 erkennbar ist. Es kann im Wesentlichen vertikal aus der Ebene des Rahmens 1 herausgeklappt werden und dient der Sicherung der Ladung beim Transport. Beim Aufrechtstellen des Transportwagens klappt das Transportgestell 7 selbständig heraus. Der Rahmen 1 weist im seitlichen Bereich Armlehnen 8 auf, die im Wesentlichen die Form eines aufgebogenen U aufweisen, wobei beide Schenkel des U mit dem Rahmen 1 verbunden sind. Diese Armlehnen 8 dienen während des Transportes zur seitlichen Sicherung der Ladung.

An dem dem Kopfteil 4 gegenüberliegenden Ende des Rahmens 1 ist ein aus dem Rahmen 1 herausziehbares Fußteil 9 mit Stützen 10 vorgesehen. Die Stützen 10 des Fußteils 9 liegen im in den Rahmen 1 eingeschobenen Zustand (Fig. 3) an mit dem Rahmen 1 fest verbundenen Fußstützen 11 an.

Der Rahmen 1 und das Kopfteil 4 sind mit einer Bespannung oder einer Auflage versehen, die die während des Transportes die Ladefläche und anschließend die Liegefläche bilden. In der Sitz-/Liegestellung (Fig. 1) bietet der Transportwagen eine bequeme Liege- bzw. Sitzposition, da das Kopfteil 4 um ca. 80° aus der Ebene des Rahmens angewinkelt werden kann.

Wie aus Fig. 3 ersichtlich, sind Multifunktionsboxen 12 vorgesehen, die durch das u-förmige Transportgestell 7 im vorderen Bereich und durch die Armlehnen 8 seitlich gesichert werden. Zusätzlich können die Multifunktionsboxen 12 auf dem Rahmen 1 formschlüssig oder kraftschlüssig sicherbar sein, beispielsweise durch Vorsprünge, die in entsprechende Nuten eingreifen oder durch in den Multifunktionsboxen vorgesehene Magnete, die mit dem metallischen Rahmen 1 zusammenwirken. In den Multifunktionsboxen können alle erforderlichen Utensilien aufbewahrt und transportiert werden,

## Patentansprüche

1. Transportwagen mit zwei Rädern (3), **dadurch gekennzeichnet, daß** ein im wesentlichen horizontaler Rahmen (1) vorgesehen ist, in dessen unteren vorderen Bereich die Aufhängung (2) für die Räder (3) angeordnet ist, wobei der Rahmen (1) in etwa oberhalb der Aufhängung (2) für die Räder (3) ein Kopfteil (4) aufweist, das um zwei Drehpunkte (5) am Rahmen (1) drehbar angelenkt ist, wobei eine Vorrichtung (6, 6a, 6b, 6c) zum Feststellen des Kopfteils (4) in bestimmten Positionen vorgesehen ist, wobei an dem vorderen Ende des Rahmens (1) ein u-förmiges Transportgestell (7) vorgesehen ist, das im Wesentlichen vertikal aus der Ebene des Rahmens (1) herausklappbar ist und wobei an dem dem Kopfteil (4) gegenüberliegenden Ende des Rahmens (1) ein aus dem Rahmen (1) herausziehbares Fußteil (9) mit Stützen (10) vorgesehen ist.

2. Transportwagen gemäß Anspruch 1, **dadurch gekennzeichnet, daß** der Rahmen (1) im seitlichen Bereich jeweils eine Armlehne (8) aufweist.

3. Transportwagen gemäß Anspruch 2, **dadurch gekennzeichnet, daß** die Armlehne (8) im Wesentlichen die Form eines aufgebogenen U aufweist, wobei beide Schenkel des U mit dem Rahmen (1) verbunden sind.

4. Transportwagen gemäß einem der Ansprüche 1 bis 3, **dadurch gekennzeichnet, daß** die Stützen (10) des Fußteils (9) im in den Rahmen (1) eingeschobenen Zustand an mit dem Rahmen (1) verbundenen Fußstützen (11) anliegen.

5. Transportwagen gemäß einem der Ansprüche 1 bis 4, **dadurch gekennzeichnet, daß** der Rahmen (1) und das Kopfteil (4) mit einer Bespannung oder einer Auflage versehen sind.

6. Transportwagen gemäß einem der Ansprüche 1 bis 5, **dadurch gekennzeichnet, daß** Multifunktionsboxen (12) vorgesehen sind, die durch die Armlehnen (8) seitlich sicherbar sind.

7. Transportwagen gemäß einem der Ansprüche 1 bis 6, **dadurch gekennzeichnet, daß** die Multifunktionsboxen (12) auf dem Rahmen (1) formschlüssig sicherbar sind.
